# EUROPEAN PATENT APPLICATION

(11) **EP 2 899 402 A1**
(43) Date of publication of application: **29.07.2015**
(21) Application number: 14152172.4
(22) Date of filing: 22.01.2014
(51) Int. Cl.: F04C 2/12, H02P 6/10

(54) **Control of lobed rotors in a generator system**

(71) Applicant: Energreen AS, 4068 Stavanger (NO); Siemens AG, 91058 Erlangen (DE)
(72) Inventor: Ørke, Per Reidar, 4044 Hafrsfjord (NO); Hartinger, Andreas, 91058 Erlangen (DE)
(74) Representative: Kransell & Wennborg KB

(57) **Abstract**

There is presented a method for controlling load in an electrical device driving a pump system. The method comprises acquiring torque characteristics for at least a first of two intermeshing lobed rotors rotatably arranged in a fluid passage, wherein the torque characteristics for example depends on leakages between the two lobed rotors in the fluid passage. The method further comprises determining, based on the torque characteristics, a control signal to compensate for torque variations for the at least first lobed rotor. The method further comprises controlling, based on the control signal, load in an electrical device coupled to one of the lobed rotors, thereby reducing variation in the torque during operation of the lobed rotors. The electrical device is either an electrical generator or an electrical motor. A controller, a computer program and a computer program product are also provided.

## Description

### TECHNICAL FIELD

Embodiments presented herein relate to generator systems comprising (lobed) rotors, and particularly to controlling load in at least one generator of such a generator system.

### BACKGROUND

In generator systems, there is always a challenge to obtain good performance and capacity for a given mode of operation, its parameters and the physical environment in which the generator systems is deployed.

There often exists a need for regulating the fluid pressure and/or the fluid flow in fluid distribution networks. An example of such a fluid distribution network is a water distribution system used in cities for distributing drinking water from a central reservoir to a plurality of households and other water consumers. Such networks or systems typically comprise one or several main water lines or conduits that convey water from a reservoir or a pump station to different zones of the network. Each zone normally comprises a secondary water line or conduit which conveys water to different areas in the zone. In each such area a consumer distribution line supplies drinking water from the secondary conduit to each individual consumer within the area. Typically the pressure in the main conduits is around 10 bar, whereas the pressure in the individual consumer lines is kept at around 3 bar. Therefore the distribution network often comprises pressure reducing means which normally are arranged at the junctions between the main and secondary conduits and/or between the secondary conduits and the consumer lines. The pressure reducing means may however also be arranged within the main, secondary or the consumer line conduits. In other systems there may be arranged additional intermediate water line conduits operating at different pressures between the main water line and the consumer distribution lines. Traditionally the pressure reducing means are constituted by conventional pressure valves, which often are spring loaded or controlled by a pilot pressure.

In order to be able to utilize the energy of the fluid, it has been suggested to provide the pressure reducing valve in such a water distributing network with a turbine which is arranged to capture energy which is released during pressure reduction. US 6,824,347 B2 discloses such valve.

WO 2008/004880 discloses an apparatus that may be used as a turbine for reducing pressure in water distribution networks and efficiently producing electricity from the pressure difference when connected to a generator. Another benefit of the apparatus of WO 2008/004880 is that it is capable of controlling the flow and the downstream pressure. In other types of water turbines the downstream pressure is always atmospheric.

The apparatus of WO 2008/004880 has two impellers arranged on two parallel shafts. When it has been installed on water distribution networks, gears transfer the load between the two shafts, which are connected to a single generator connected to the power grid. Another function of the gears is to synchronize the rotational movements of the two impellers. Thus, such gears are sometimes referred to as timing gears.

Furthermore, the two impellers induce torque variations. The torque variations are mainly caused by internal leak flow at different rotational positions of the two impellers. In a pipeline system with non-compressible fluids, these variations will be seen as pressure pulses. The frequency and wavelength of the pressure pulses will vary with rotation speed of the two impellers, and can interact with the natural frequencies in the pipeline in which the generator system is installed. Standing waves can occur, and when overlapping the resonance frequency, severe vibration can occur, which can lead to damage of pipes, pipe anchoring or other equipment.

Hence, there is still a need for an improved control of a generator in a generator system comprising lobed rotors.

### SUMMARY

An object of embodiments herein is to provide improved control of a generator or motor in a generator/pump system comprising lobed rotors. According to a first aspect there is presented a method for controlling load in an electrical device. The method comprises acquiring torque characteristics for at least a first of two intermeshing lobed rotors rotatably arranged in a fluid passage. The method further comprises determining, based on the torque characteristics, a control signal to compensate for torque variations for the at least first lobed rotor. The method further comprises controlling, based on the control signal, load in an electrical device wherein the electrical device is an electrical generator or an electrical motor, the electrical device being coupled to one of the lobed rotors, thereby reducing variation in the torque during operation of the lobed rotors.

Advantageously, this enables a resulting torque (and fluid pressure) in the two lobed rotors to be stable.

According to a second aspect there is presented a controller for controlling load in an electrical device. The controller comprises a processing unit. The processing unit is arranged to acquire torque characteristics for at least a first of two intermeshing lobed rotors rotatably arranged in a fluid passage. The processing unit is further arranged to determine, based on the torque characteristics, a control signal to compensate for torque variations for the at least first lobed rotor. The processing unit is further arranged to control, based on the control signal, load in an electrical device wherein the electrical device is an electrical generator or an electrical motor, the electrical device being coupled to one of the lobed rotors, thereby reducing variation in the torque during operation of the lobed rotors.

According to embodiments the torque characteristics depend on at least one of leakages between the two lobed rotors in the fluid passage, imbalances between the two lobed rotors, tolerances between the two lobed rotors, and/or varying friction between the two lobed rotors.

According to a third aspect there is presented a computer program for controlling load in an electrical device, the computer program comprising computer program code which, when run on a controller, causes the controller to perform a method according to the first aspect.

According to a fourth aspect there is presented a computer program product comprising a computer program according to the third aspect and a computer readable means on which the computer program is stored. According to an embodiment the computer readable means are non-volatile computer readable means.

It is to be noted that any feature of the first, second, third and fourth aspects may be applied to any other aspect, wherever appropriate. Likewise, any advantage of the first aspect may equally apply to the second, third, and/or fourth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating a generator/pump system;
Fig 2 schematically illustrates four-quadrant operating modes of rotary lobe pumps;
Figs 3 and 4 schematically illustrate geometry of helically toothed rotary lobes;
Fig 5 schematically illustrates torque characteristics 12 of different lobed rotors;
Fig 6 schematically illustrates a typical efficiency curve of a rotary lobe motor;
Figs 7 and 8 are schematic diagrams illustrating a generator/pump system where embodiments presented herein may be applied;
Fig 9 is a schematic diagram showing functional modules of a controller;
Fig 10 shows one example of a computer program product comprising computer readable means; and
Figs 11 and 12 are flowcharts of methods according to embodiments.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

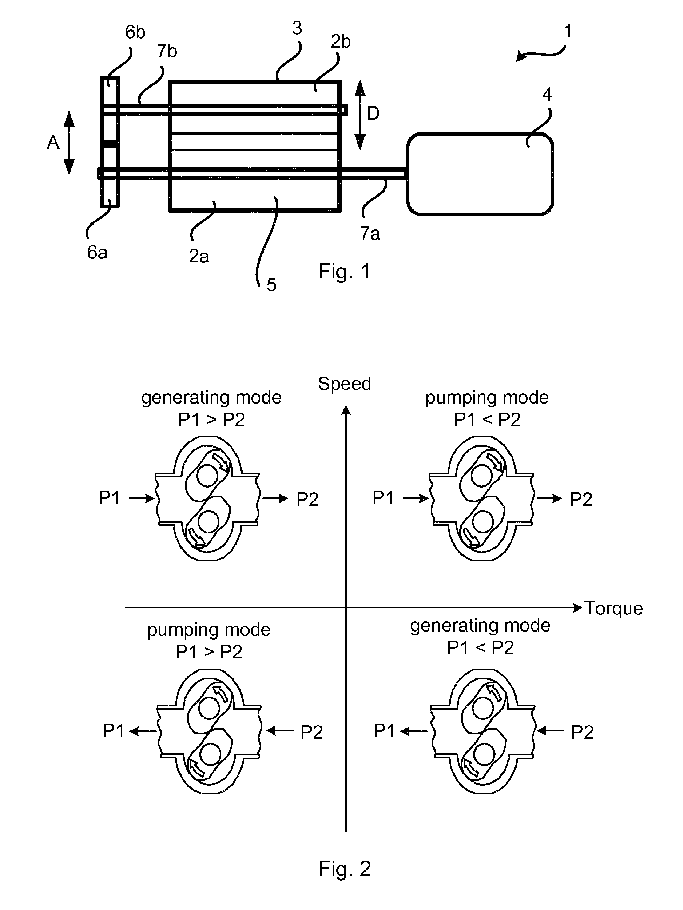

Fig 1 is a schematic diagram illustrating a generator/pump system 1. The generator/pump system 1 comprises a first lobed rotor 2a and a second lobed rotor 2b enclosed in a housing 3. The generator/pump system 1 further comprises an electrical device 4 to which the first lobed rotor 2a is coupled. In general terms the electrical device 4 is capable of varying a load of the first lobed rotor 2a. The electrical device 4 may be either an electrical generator or an electrical pump. Hence, as will be further disclosed below the system 1 may operate either in a generating mode or in a pumping mode. The first lobed rotor 2a and the second lobed rotor 2b are rotatably arranged in a fluid passage 5 enclosed by the housing 3 such that the lobes of the first and the second lobed rotor 2b intermesh to create a barrier between a high-pressure and a low-pressure side of the housing 3 during operation of the generator/pump system 1. The first lobed rotor 2a and the second lobed rotor 2b are furthermore operatively connected by means of timing gears 6a, 6b. One timing gear is arranged on each shaft 7a, 7b of the two lobed rotors 2a, 2b. The timing gears 6a, 6b are thereby used for synchronization of the lobed rotors 2a, 2b.

Each lobed rotor 2a, 2b may for example comprise 2, 3, 4 or 5 lobes. The lobes are typically ridges generally extending along the length of the shaft 7a, 7b if the lobed rotor is arranged on a shaft 7a, 7b. The lobes/ridges may be straight. In such case, the area and geometry of the gap between the lobed rotors 2a, 2b through which fluid may "leak" from the high-pressure side to the low-pressure side vary as the lobed rotors 2a, 2b rotate. The varying degree of leakages over a period results in pressure variations causing mechanical stress. In a worst case scenario, the pressure variations match the natural frequency of the device, which may lead to a severe mechanical failure.

As noted above the system 1 of Fig 1 may be used as a pump system. Hence the lobed rotors 2a, 2b may take the roles of rotary lobe pumps. In general terms, rotary lobe pumps are positive displacement pumps. Because of its symmetrical design these types of pumps are able to operate in both directions with identical properties. For the same reason rotary lobe pumps can handle both positive and negative differential pressure between inlet and outlet. If the torque generated by the differential pressure exceeds the torque of the internal friction, the shaft 7a, 7b will generate torque. Similar effects may be caused when using the system 1 of Fig 1 as a generator system. The pump and generator principles as four-quadrant operating modes are shown in Fig. 2. In more detail, Fig 2 illustrates four-quadrant operating modes of rotary lobe pumps/generators where arrows are showing directions of rotating and of a theoretical fluid flow. In Fig 2 P1 and P2 denote the fluid pressure at respective sides of the lobed rorors 2a, 2b.

Rotary displacement pumps with a periodically fluctuating volume flow Q generate pressure pulsations in fluid in the connected piping due to acceleration and deceleration. The internal displacement mechanism of rotary lobe pumps of traditional design according to the Roots principle brings about flow fluctuations with peak values determined by two design characteristics, namely shaft 7a, 7b distance A and lobe tip diameter D. In general terms, torque characteristics can be determined for any rotational device, whereof rotary lobe pumps according to the Root's principle is only one example. Moreover, the displacement of a rotary lobe pump is proportional to the torque. Therefore the pulsation in volume flow can be determined by determining the torques for both shafts 7a, 7b resulting from a pressure load. In general terms, a differential pressure acts on a line connecting the sealing point of one lobe tip with the sealing point of the other lobe tip via the center of that lobe, the meshing point of the lobes and the center of the second lobe. Similar effects may be caused when using the system 1 of Fig 1 as a generator system.

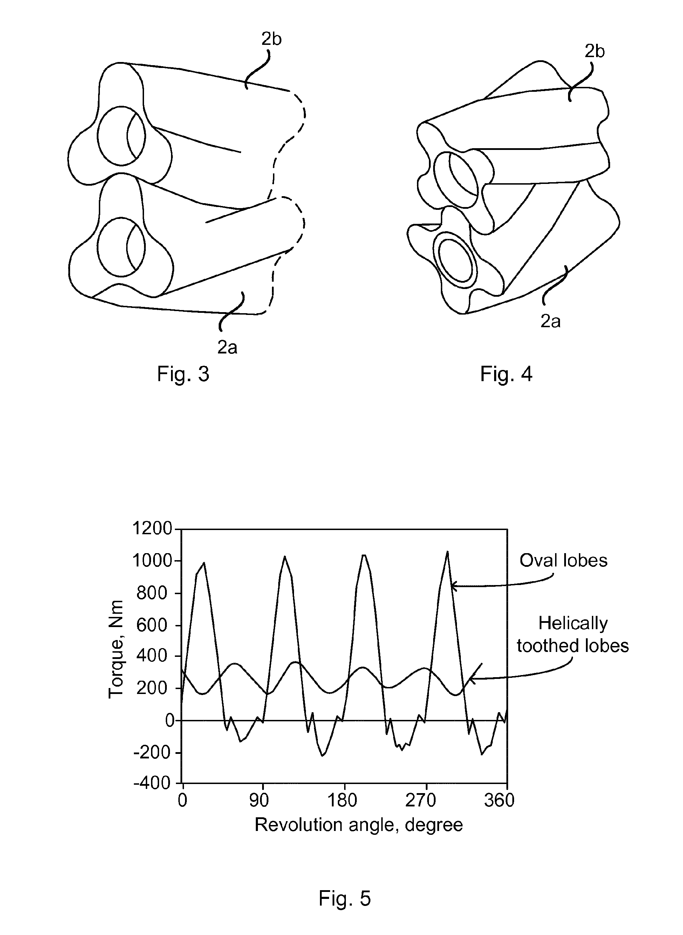

Helical lobe geometry may be utilized to reduce pressure pulsation (which correlates to shaft torque). A displacement-pulsation-free helically toothed lobe has been developed to remove, or at least mitigate, such pulsation problems. Fig 3 illustrates the geometry of one example of helically toothed rotary lobes 2a, 2b. Fig 4 illustrates the geometry of another example of helically toothed rotary lobes 2a, 2b by which any remaining leakage flow pulsation may be reduced to a minimum, thus being an improvement of the helically toothed rotary lobes illustrated in Fig 3.

Equipped with such helically toothed lobes the rotary lobe pumps/generators typically run smooth even when installed in a large pipework with long and rigid pipes and "rigid" (non-compressible) fluids without gas content, like water. Fig 5 illustrates torque pulsation of a typical rotary pump with oval lobes and helically toothed lobes, respectively, at a water flow of 500 rpm (rotations per minute) and a pressure of 2.3 bar. These test results, which are from the "Institute of Agricultural Engineering Bornim", thus show a clear reduction of pulsation in favor of the rotors with helically toothed lobes. Fig 5 also shows the remaining pulsation caused by unsteady leakage flow.

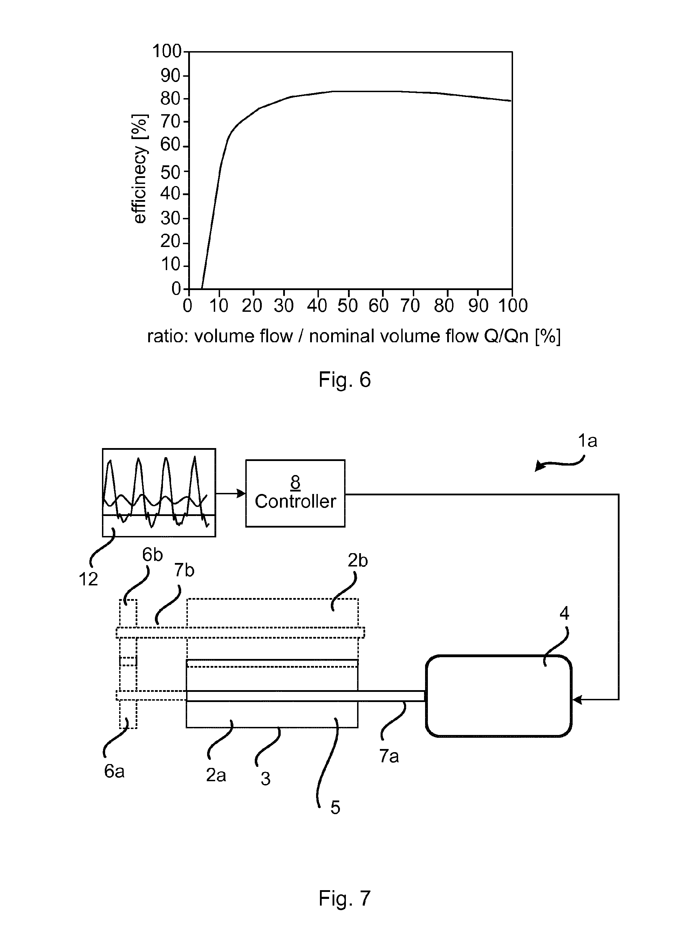

According to the state of the art the lobes of rotary lobe pumps are commonly synchronized by timing gears 6a, 6b and the lobes do therefore neither have to touch each other nor to touch the housing 3 enclosing the rotary lobes. In combination with helically toothed lobes this allows a very high speed range. Exemplary efficiency over a speed range is shown in Fig. 6 which illustrates a typical efficiency curve of a rotary lobe motor.

As rotary lobe pumps are positive displacement pumps their theoretical displacement per revolution is constant. Because the lobes run without contact there is always an internal leakage flow through the narrow gaps.

As noted above, oval lobes induce high torque variations. Helical lobes may be utilized in order to significantly reduce the torque variations. However, there are still some residual torque variations, which are caused by internal leak flow at different rotational positions.

In a pipeline system with non-compressible fluids, these variations will be seen as pressure pulses. The frequency and wavelength of the pressure pulses will vary with rotation speed of the rotors, and can interact with the natural frequencies in the pipeline in which the generator/pump system is installed. Standing waves can occur, and when overlapping the resonance frequency, severe vibration can occur, which can lead to damage of pipes, pipe anchoring or other equipment.

The embodiments disclosed herein relate to controlling load in an electrical device 4 provided as either an electrical generator or an electrical motor. In order to obtain controlling load in an electrical device 4 there is provided a controller 8, a method performed in the controller 8, a computer program 18 comprising code, for example in the form of a computer program product 19, that when run on a controller 8, causes the controller 8 to perform the method.

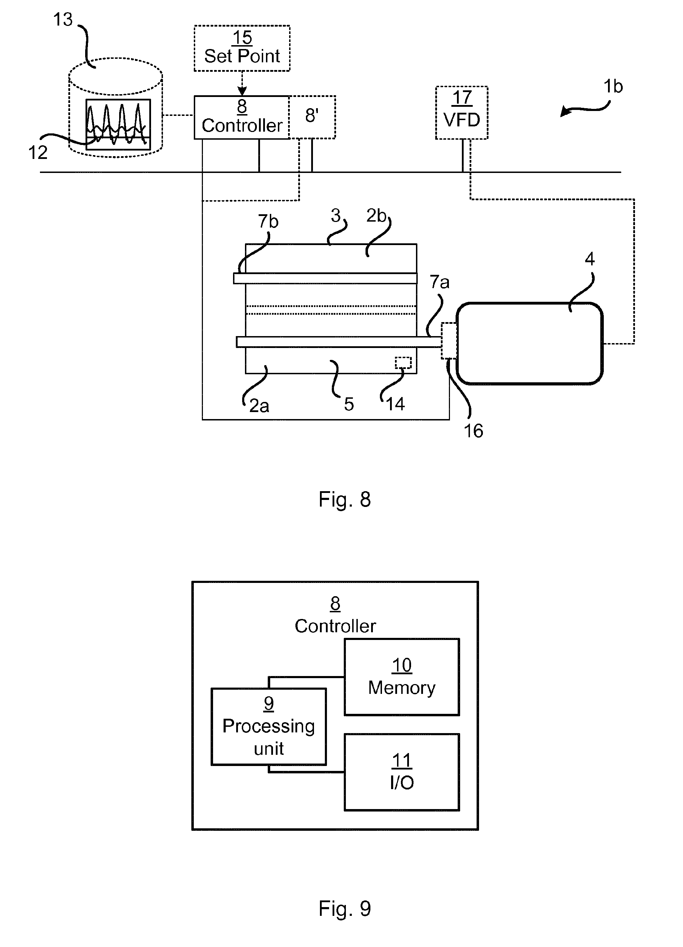

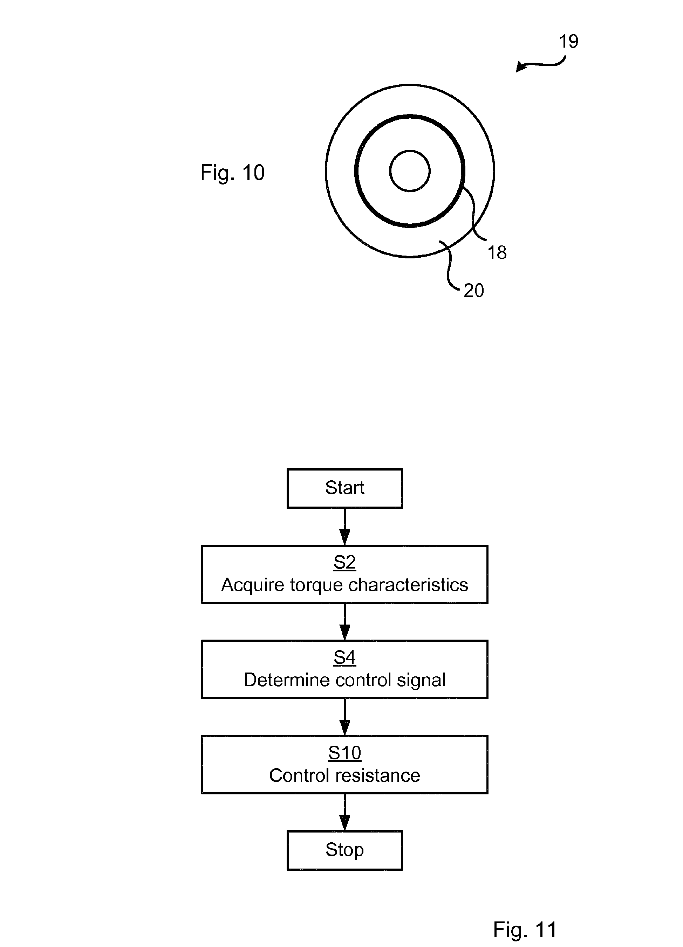

Fig 9 schematically illustrates, in terms of a number of functional modules, the components of a controller 8. A processing unit 9 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 19 (as in Fig 10), e.g. in the form of a memory 10. Thus the processing unit 9 is thereby arranged to execute methods as herein disclosed. The memory 10 may also comprise persistent storage, which, for example, can be any single one or combination of magnetic memory, optical memory, solid state memory or even remotely mounted memory. The controller 8 may further comprise an input/output (I/O) interface 11. The processing unit 9 controls the general operation of the controller 8, e.g. by sending control signals to the I/O interface 11 so as to control other entities and devices and to acquire data received by the I/O interface 11. Other components, as well as the related functionality, of the controller 8 are omitted in order not to obscure the concepts presented herein. The controller 8 may be part of a generator/pump system 1, 1a.

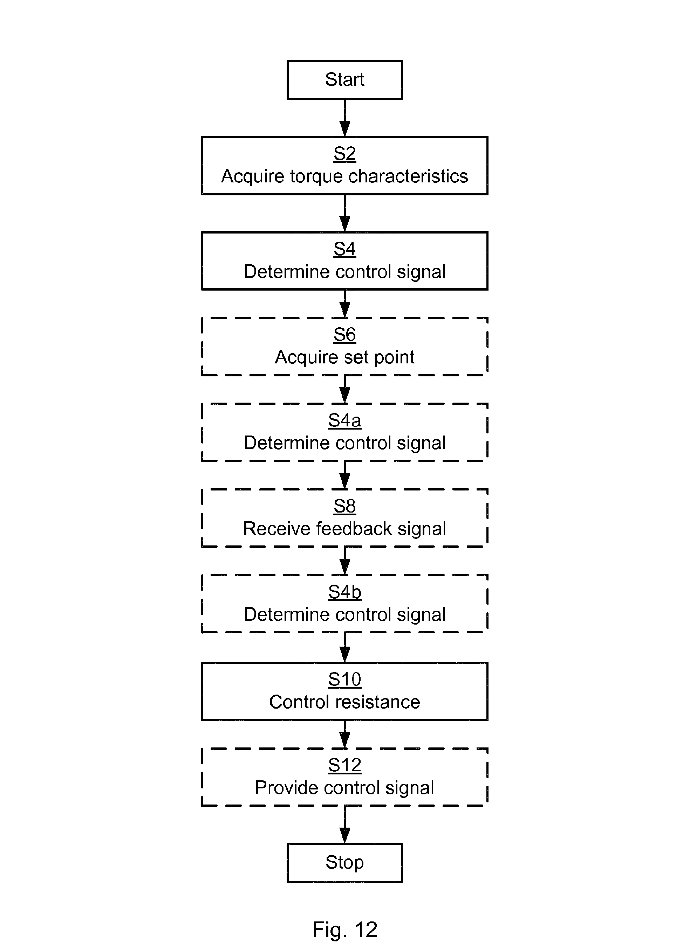

Figs 11 and 12 are flow charts illustrating embodiments of methods for controlling load in an electrical device 4. The methods are performed in the controller 8. The methods are advantageously provided as computer programs 18. Fig 10 shows one example of a computer program product 19 comprising computer readable means 20. On this computer readable means 20, a computer program 18 can be stored, which computer program 18 can cause the processing unit 9 and thereto operatively coupled entities and devices, such as the memory 10 and/or the I/O interface 11 to execute methods according to embodiments described herein. In the example of Fig 10, the computer program product 19 is illustrated as an optical disc, such as a CD (compact disc) or a DVD (digital versatile disc) or a Blu-Ray disc. The computer program product 19 could also be embodied as a memory 10, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory. Thus, while the computer program 18 is here schematically shown as a track on the depicted optical disk, the computer program 18 can be stored in any way which is suitable for the computer program product 19.

Fig 7 is a schematic diagram illustrating a generator/pump system 1a where embodiments presented herein can be applied. The generator/pump system 1a comprises a first lobed rotor 2a enclosed in a housing 3. The generator/pump system 1a may further comprise a second lobed rotor 2b. Also the second lobed rotor may be enclosed by the housing 3. The generator system 1a further comprises an electrical device 4 to which the first lobed rotor 2a is coupled. The electrical device 4 may be an electrical generator or an electrical motor. In general terms the electrical device 4 is capable of varying a load of the first lobed rotor 2a. In case the generator/pump system 1a comprises also a second lobed rotor 2b, the first lobed rotor 2a and the second lobed rotor 2b may be rotatably arranged in a fluid passage 5 enclosed by the housing 3 such that the lobes of the first lobed rotor 2a and the second lobed rotor 2b intermesh to create a barrier between a high-pressure and a low-pressure side of the housing 3 during operation of the generator/pump system 1a. The generator/pump system 1a further comprises a controller 8. The controller 8 is arranged to acquiring torque characteristics 12. The controller 8 is thereby arranged to control the electrical device 4.

The inherent torque variations in a lobe pump system can be characterized by measurement. Such characteristics can be measured and applied for all relevant combinations of flow rate and pressures for a given fluid viscosity. A method for controlling load in electrical device 4 therefore comprises in a step S2 acquiring torque characteristics 12 for at least the first lobed rotor 2a. In general terms the torque characteristics may depend on leakages between the two lobed rotors 2a, 2b in the fluid passage 5. The torque characteristics may additionally or alternatively depend on imbalances between the two lobed rotors 2a, 2b. The torque characteristics may additionally or alternatively depend on tolerances between the two lobed rotors 2a, 2b. The torque characteristics may additionally or alternatively depend on varying friction between the two lobed rotors 2a, 25. In case the generator/pump system 1a comprises only a first lobed rotor 2a the torque characteristics 12 depend only on similar characteristics of a generator/pump system 1a only comprising one lobed rotor 2a.

According to an embodiment the torque characteristics 12 represent torque values being a function of rotational position of the at least first of the two lobed rotors 2a, 2b. As noted above, Fig 5 illustrates an example of torque characteristics 12 of two intermeshing lobed rotors 2a, 2b rotatably arranged in a fluid passage 5. The torque characteristics 12 are acquired by the controller 8. The torque characteristics 12 are acquired by the I/O interface 11 of the controller 8 and provided to the processing unit 9 for further processing and/or analysis. The processing unit 9 may be arranged to store the acquired torque characteristics 12 in the memory 10.

According to one embodiment the torque characteristics 12 are off-line torque characteristics 12. Fig 8 illustrates a generator/pump system 1b where embodiments presented herein can be applied. In comparison to the generator/pump system 1a of Fig 7, the generator/pump system 1b of Fig 8 additionally comprises an external database 13. The database 13 comprises one or more off-line torque characteristics 12. The off-line torque characteristics 12 may be based on previously measured on-line torque characteristics 12. A set of torque characteristics 12 can be acquired, for various combinations of flow rate, pressure and viscosity. Alternatively the off-line torque characteristics 12 may be based on computer generated simulations of operation of generator/pump system 1, 1a, 1b or modeling of the same. The I/O interface 11 of the controller 8 may therefore be arranged to receive off-line torque characteristics 12 from the external database 13. An alternative approach comprises using instantaneous torque characteristics readings. The torque may thereby be dynamically compensated for according to the readings. According to one embodiment the torque characteristics 12 thus are on-line torque characteristics 12. That is, according to an embodiment the torque characteristics 12 are on-line torque characteristics 12 acquired during current operation of the two lobed rotors 2a, 2b. In Fig 8 the generator/pump system 1b furthermore comprises a sensor 14 arranged to sense torque characteristics 12 from an electrical device 4. The readings of such a sensor 14 may be an indirect measure of the state of the synchronization between the two lobed rotors 2a, 2b, wherein higher pressure variations in the sensor indicate that the lobed rotors 2a, 2b are out of sync. According to an embodiment the sensor 14 is provided as a pressure transducer arranged to measure the turbine flow. The I/O interface 11 of the controller 8 may therefore be arranged to receive on-line torque characteristics 12 from the sensor 14. The controller 8 when provided with such readings may be arranged to control the electrical device 4 to adjust the relative rotational positions of the lobed rotors 2a, 2b. Readings of decreased pressure variations in such an embodiment may indicate a confirmation of successful control or at least that the adjustments were made in the right direction. Thus, the sensor 14 may be used both for diagnosis and feed-back during adjustments. The sensor 14 may be a pressure sensor. As the skilled person understands gyro sensors sensing shakings of the electrical device 4 may be used for the same type of indirect readings as a pressure sensor.

In a step S4 a control signal based on the torque characteristics 12 is determined to compensate for torque variations for the at least first lobed rotor. According to an embodiment the control signal is determined so as to counter-weight the torque variations.

The torque characteristics 12 (off-line and/or on-line) can be superimposed on a set-point in the controller 8. Thereby the set-point may vary corresponding to the torque characteristic. According to an embodiment a set point is therefore acquired, step S6. In Fig 8 the generator/pump system 1b furthermore comprises a set point provider 15. The set point is received by the I/O interface 11 and provided to the processing unit 9 for further processing. The control signal determined in step S4 may thus be determined also based on the set point, step S4a. The set-point may be different for each rotational degree of the lobed rotors 2a, 2b, and hence counter-weight the inherent torque and thereby enable a control signal to be determined by means of which a resulting stable torque (and/or pressure) is produced.

The electrical device 4 may be equipped with absolute encoders to enable the controller 8 to read the absolute rotational position of the shaft 7a, 7b of the electrical device 4. The controller 8 may then control the electrical device 4 precisely and emulate a physical timing gear. According to this embodiment, the lobes will not be used to synchronize each other, but they will be controlled to run with optimal internal position. The generator/pump system 1b may comprise at least one encoder 16 being coupled to the controller 8 and arranged to read a rotational position of the first lobed rotor 2a and/or the second lobed rotor 2b. According to an embodiment a feedback signal is received, step S8, from the electrical device 4 during operation of the two lobed rotors 2a, 2b. According to an embodiment the torque characteristics are relative to the exact rotational position of the lobed rotors 2a, 2b. The encoder 16 may then be used to correlate the torque characteristics 12 with real position of the lobed rotors 2a, 2b. The feedback signal thus pertains to a rotational position of at least one of the two lobed rotors 2a, 2b. The feedback signal may be based on a reading of a rotational position of the first lobed rotor 2a relative a rotational position of the second lobed rotor 2b. For example, the absolute rotational position of the respective lobed rotors 2a, 2b may be read to calculate their relative rotational positions. Alternatively, the rotational positions of the lobed rotors 2a, 2b relative each other is read directly. The feedback signal is at the controller 8 received by the I/O interface 11 and provided to the processing unit 9 for further processing. The control signal determined in step S4 may thus be determined also based on the feedback signal, step S4b. Software synchronization of the generator/pump system is thereby achieved. This will reduce the wear of the lobes of the lobed rotors 2a, 2b.

In a step S10 load in a electrical device 4 coupled to one of the lobed rotors 2a, 2b is controlled. Variation in the torque during operation of the lobed rotors 2a, 2b is thereby reduced.

The generator/pump system 1b may further comprise a drive 17. The drive is arranged to drive the electrical device 4. According to an embodiment the at least one drive 17 is a variable frequency drive (VFD). Thus the electrical device 4 may be coupled to a variable-frequency drive (VFD). The VFD may act as a sensor. Thereby the use of one or more external sensors 14 may be avoided. The controller 8 may be arranged to, in a step S12, provide the control signal to the VFD 17, 17b. Two controllers 8, 8' may be arranged to provide the control signal to the VFDs 17.

As noted above with reference to the generator/pump system 1 of Fig 1, the first lobed rotor 2a and the second lobed rotor 2b may be operatively connected by means of timing gears 6a, 6b. The disclosed embodiments may thereby be applied to standard rotary lobe turbines. As illustrated in Fig 7 and according to embodiments one timing gear 6a, 6b is therefore arranged on each shaft 7a, 7b of the two lobed rotors 2a, 2b. The timing gears 6a, 6b may thereby provide for improved synchronization of the lobed rotors 2a, 2b.

As noted above, the electrical device 4 may be an electricity generator and hence used in a generating mode. In the generating mode the electrical device 4 is an electrical generator. The electrical generator is in the generating mode arranged to be driven by the lobed rotor 2a coupled to the electrical generator. Thus, in an operating state of the generator/pump system 1a, 1b this means that the lobed rotor 2a coupled to the electrical generator is arranged to drive the electrical generator upon receiving a flow of a fluid in the fluid passage 5.

As noted above, the disclosed methods and controller 8 may be used in a pumping mode as well as in the generating mode. In the pumping mode the electrical device 4 is an electrical motor. The electrical motor is in the pumping mode arranged to drive the lobed rotor 2a coupled to the electrical motor. Thus, in an operating state of the generator/pump system 1a, 1b this means that the electrical motor is arranged to pump a fluid through the fluid passage 5.

As understood from the above, the controller 8 is particularly suited for a water distribution system. As a configuration of the second aspect of the present disclosure, there is thus provided a water distribution system, such as a municipal water distribution system, comprising at least one controller 8 according to the second aspect. Likewise, as a configuration of the first aspect of the present disclosure, there is thus provided a method performed in a water distribution system, such as a municipal water distribution system. The water distribution system normally requires several pressure reductions to meet the pressure specifications for its different parts. In an embodiment of the configuration, the water distribution system may thus comprise a plurality of controllers 8, 8' according to the second aspect. The device(s) of the water distribution system may be connected to a power grid. Normally, the water distribution also comprises water pipes and possibly tanks, such as water storage tanks. The controller 8 of the second aspect may for example be arranged where a pipe ends in a tank ("end-of-pipe" arrangement) to convert the remaining overpressure in the water to electrical energy before the water is stored in the tank. Also, the controller 8 may be arranged between two pipe sections to set the water pressures according to specification of the water distribution system.

The present disclosure has mainly been described above with reference to a few embodiments. However, as is readily appreciated by a person skilled in the art, other embodiments than the ones disclosed above are equally possible within the scope of the present disclosure, as defined by the appended patent claims. For example, the herein disclosed aspects, concept and embodiments may readily apply to any positive displacement devices comprising one or more rotating shafts/impellers.

## Claims

1. A method for controlling load in an electrical device (4), comprising:
acquiring (S2) torque characteristics (12) for at least a first of two intermeshing lobed rotors (2a, 2b) rotatably arranged in a fluid passage (5);
determining (S4), based on said torque characteristics (12), a control signal to compensate for torque variations for the at least first lobed rotor; and
controlling (S10), based on said control signal, load in an electrical device (4) wherein the electrical device (4) is an electrical generator or an electrical motor, the electrical device being coupled to one of the lobed rotors (2a, 2b), thereby reducing variation in the torque during operation of the lobed rotors (2a, 2b).

2. The method according to claim 1, wherein the torque characteristics (12) depend on at least one of leakages between the two lobed rotors (2a, 2b) in the fluid passage (5), imbalances between the two lobed rotors (2a, 2b), tolerances between the two lobed rotors (2a, 2b), and/or varying friction between the two lobed rotors (2a, 2b).

3. The method according to claim 1 or 2, wherein the control signal is determined so as to counter-weight the torque variations.

4. The method according to any one of the preceding claims, further comprising:
acquiring (S6) a set point; and
determining (S4a) the control signal also based on the set point.

5. The method according to any one of the preceding claims, wherein the torque characteristics (12) are off-line torque characteristics.

6. The method according to any one of claims 1 to 4, wherein the torque characteristics (12) are on-line torque characteristics acquired during current operation of the two lobed rotors (2a, 2b).

7. The method according to any one of the preceding claims, further comprising:
receiving (S8) a feedback signal from the electrical device (4) during operation of the two lobed rotors (2a, 2b), the feedback signal pertaining to a rotational position of at least one of the two lobed rotors (2a, 2b); and
determining (S4b) the control signal also based on the feedback signal.

8. The method according to any one of the preceding claims, wherein the two lobed rotors (2a, 2b) are coupled by timing gears (6a, 6b).4

9. The method according to any one of the preceding claims, further comprising:
providing (S12) the control signal to a variable frequency driver, VFD, (17) the VFD (17) being operatively coupled to the electrical device (4).174

10. The method according to any one of the preceding claims, wherein the lobes of the lobed rotors (2a, 2b) are helical.

11. The method according to any one of the preceding claims, wherein the electrical device (4) is an electrical generator, and wherein the lobed rotor (2a) coupled to the electrical generator drives the electrical generator upon receiving a flow of a fluid in the fluid passage (5).

12. The method according to any one of claims 1 to 10, wherein the electrical device (4) is an electrical motor, the electrical motor driving the lobed rotor (2a) coupled to the electrical motor so as to pump a fluid through the fluid passage (5).

13. A controller (8, 8') for controlling load in an electrical device (4), comprising a processing unit (9) arranged to:
acquiring torque characteristics (12) for at least a first of two intermeshing lobed rotors (2a, 2b) rotatably arranged in a fluid passage (5);
determine, based on said torque characteristics (12), a control signal to compensate for torque variations for the at least first lobed rotor; and
control, based on said control signal, load in an electrical device (4) wherein the electrical device (4) is an electrical generator or an electrical motor, the electrical device (4) being coupled to one of the lobed rotors (2a, 2b), thereby reducing variation in the torque during operation of the lobed rotors (2a, 2b).

14. A computer program (18) for controlling load in an electrical device (4), the computer program (18) comprising computer program code which, when run on a processing unit (9), causes the processing unit (9) to:
acquire (S2) torque characteristics (12) for at least a first of two intermeshing lobed rotors (2a, 2b) rotatably arranged in a fluid passage (5);
determine (S4), based on said torque characteristics (12), a control signal to compensate for torque variations for the at least first lobed rotor; and
control (S10), based on said control signal, load in an electrical device (4) wherein the electrical device (4) is an electrical generator or an electrical motor, the electrical device (4) being coupled to one of the lobed rotors (2a, 2b), thereby reducing variation in the torque during operation of the lobed rotors (2a, 2b).

15. A computer program product (19) comprising a computer program (18) according to claim 14 and a computer readable means (20) on which the computer program (18) is stored.
